# EUROPEAN PATENT SPECIFICATION

(11) **EP 4 162 651 B1**
(45) Date of publication and mention of the grant of the patent: **25.02.2026**
(21) Application number: 21729568.2
(22) Date of filing: 02.06.2021
(51) Int. Cl.: H04L 41/5025, H04L 41/40, H04L 41/14

(54) **EVOLUTIONARY NETWORK RE-CONFIGURATION**
EVOLUTIONÄRE NETZWERKREKONFIGURATION
RECONFIGURATION DE RÉSEAU ÉVOLUTIF

(30) Priority: 09.06.2020 GB 202008756
(43) Date of publication of application: 12.04.2023
(73) Proprietor: British Telecommunications public limited company, London E1 8EE (GB)
(72) Inventor: ROSCOE, Jonathan, London EC4V 5BT (GB); GELARDI, Gabriele, London EC4V 5BT (GB)
(74) Representative: British Telecommunications public limited company Intellectual Property Department
(86) International application number: PCT/EP2021/064836
(87) International publication number: WO 2021/249849

(56) References cited:
- WO-A1-2015/104552
- US-A1- 2019 043 350
- SUKHPAL SINGH GILL ET AL: "Transformative effects of IoT, Blockchain and Artificial Intelligence on cloud computing: Evolution, vision, trends and open challenges", ARXIV.ORG, CORNELL UNIVERSITY LIBRARY, 201 OLIN LIBRARY CORNELL UNIVERSITY ITHACA, NY 14853, 21 October 2019 (2019-10-21), XP081524149
- LOURDES ARAUJO ET AL: "Diversity Through Multiculturality: Assessing Migrant Choice Policies in an Island Model", IEEE TRANSACTIONS ON EVOLUTIONARY COMPUTATION, IEEE SERVICE CENTER, NEW YORK, NY, US, vol. 15, no. 4, 31 August 2011 (2011-08-31), pages 456 - 469, XP011337810, ISSN: 1089-778X, DOI: 10.1109/TEVC.2010.2064322

## Description

The present invention relates to software defined networks and, in particular, reconfiguration of software defined networks.

Software defined networks (SDNs) provide dynamic configuration of physical or virtualised network components such as switches and routers for the purpose of providing network services for network applications. Divided logically into a "data plane", consisting of network components, and a "control plane", consisting of logic for configuring and controlling the network components, a particular specification of an SDN configuration by one or more SDN controllers seeks to provide network services in an efficient and reliable manner.

The configurability and dynamic nature of SDNs permit regular and/or routine reconfiguration of a network to achieve desired performance goals. In particular, one or more objective measures of performance for a network may be desired.

It is therefore desirable to provide for the effective dynamic reconfiguration of an SDN.

US 2019/043350 discloses systems and methods for a roadside network. The roadside network includes one or more processors to receive gather traffic data from a first set and a second set of sensors associated with a first sector and second sector, respectfully. A minimum forward visibility range is determined. Portions of the sectors overlap to provide the minimum forward visibility range. Processed traffic data is generated based on the traffic data for both sectors. The processed traffic data is then sent to antennas to be transmitted to the respective sector.

Sukhpal Singh Gill et al: "Transformative effects of IOT, Blockchain and Artificial Intelligence on cloud computing: Evolution, vision, trends and open challenges", ARXIV.ORG, CORNELL UNIVERSITY LIBRARY, 201 OLIN LIBRARY CORNELL UNIVERSITY ITHICA, NY 14853, 21 October 2019, discloses how blockchain, loT and Al influence cloud computing systems.

According to a first aspect of the present invention, there is provided a computer implemented method of adapting a configuration of a software defined network to improve a measure of network performance towards an objective measure of performance according to appended independent claim 1.

Preferably, a determination, by a network node, of a performance of the network provided by a candidate adjusted configuration is made by the node executing a simulation of the software defined network in which the candidate adjusted configuration is applied and determining a measure of performance provided by the candidate configuration change by measuring a network performance of the simulated software defined network.

Preferably, the distributed data structure is a distributed hash table.

Preferably, the population of candidate configuration changes is a selected subset of the candidate configuration changes in the distributed data structure selected based on the measure of network performance associated with candidate configuration changes in the distributed data structure.

Preferably, the distributed database is a blockchain data structure.

Preferably, the evolutionary algorithm is a genetic algorithm.

According to a second aspect of the present invention, there is provided a computer system including a processor and memory storing computer program code for performing the steps of the method set out above.

According to a third aspect of the present invention, there is provided a computer program element comprising computer program code to, when loaded into a computer system and executed thereon, cause the computer to perform the steps of a method as described above.

Embodiments of the present invention will now be described, by way of example only, with reference to the accompanying drawings, in which:
Figure 1 is a block diagram a computer system suitable for the operation of embodiments of the present invention;
Figure 2 is a component diagram of an arrangement for adapting a configuration of a software defined network (SDN) to improve a measure of network performance towards an objective measure of performance according to an embodiment of the present invention; and
Figure 3 is a flowchart of a method for adapting a configuration of a software defined network (SDN) to improve a measure of network performance towards an objective measure of performance according to an embodiment of the present invention.

The present invention is defined in the appended independent claims to which reference should be made. Advantageous features of preferred embodiments are set out in the appended dependent claims.

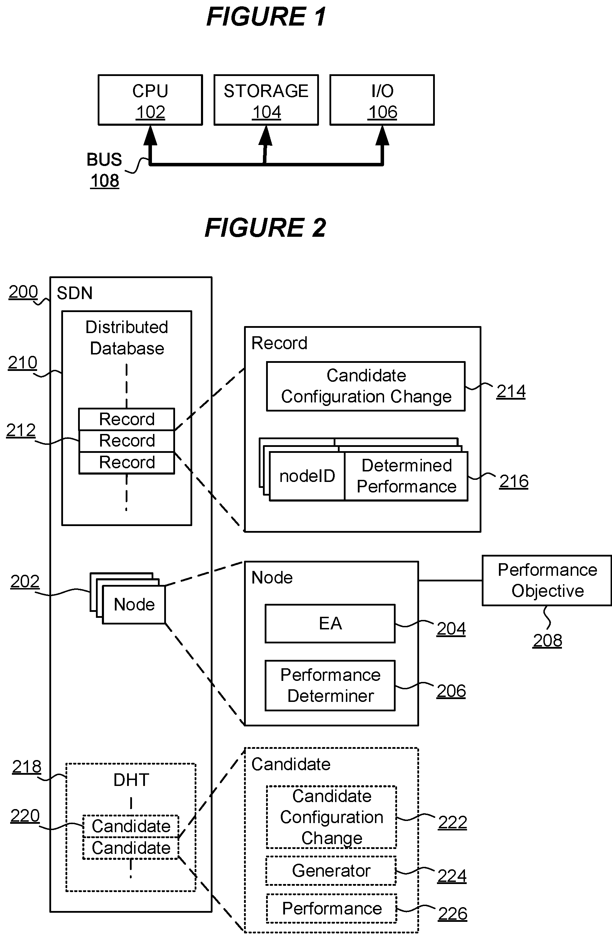

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement for adapting a configuration of an SDN to improve a measure of network performance towards an objective measure of performance according to an embodiment of the present invention. An SDN 200 is provided as a set of communicatively connected physical and/or virtual configurable network components constituting a network. SDN 200 can provide a dynamic configuration of physical or virtualised network components such as switches and routers for the purpose of providing network services for network applications. As will be apparent to those skilled in the art, an SDN is typically divided logically into a "data plane", consisting of network components, and a "control plane", consisting of logic for configuring and controlling the network components. A particular specification of an SDN configuration by an SDN controller seeks to provide network services in an efficient and reliable manner.

Embodiments of the present invention provide for adapting a configuration of the SDN 200 such as by way of one or more of, inter alia: adapting configuration of one or more SDN controllers of the SDN 200; adapting parameters and/or configuration options of the SDN 200; and adjusting an arrangement of the SD 200.

Preferably, the SDN 200 includes one or more SDN controllers as hardware, software, firmware or combination components or set of components for providing control functionality for a set of physical and/or virtual network components constituting the SDN 200. For example, such components can provide data forwarding, switching and routing facilities. Thus, an SDN controller implements a particular configuration defining rules according to which the configuration of each of at least a subset of the network components are configured. Such rules can include, for example, a routine, forwarding, data flow or switching rule for a network component. Furthermore, network components and networked devices such as network attached devices are operable within and with the SDN 200, and each of these such devices can also be configured according to configuration rules affecting the operation of the SDN 200.

An SDN controller provides interfaces, services and/or facilities for network applications seeking to communicate via one or more communication networks and, along with other network components, is configurable such as by way of parameters, configuration options, instantiation options and the like. For example, an SDN controller can provide flow control for one or more network components using an SDN controller protocol such as OpenFlow. Examples of an SDN controller include: Beacon, a Java-based OpenFlow SDN controller that supports both event-based and threaded operation (see "The Beacon OpenFlow Controller" (David Erickson, Stanford University) available at http://yuba.stanford.edu/~derickso/docs/hotsdn15-erickson.pdf; and OpenDaylight from the Linux Foundation (see "Open Daylight as a Controller for Software Defined Networking", Badotra and Singh, 2015, IJARCS available from https://www.researchgate.net/publication/319547264_Open_Daylight_as_a_Controller_for_S oftware_Defined_Networking).

Network applications can communicate via the SDN 200 using communications services as network services provided by the SDN 200 via network components. Each of the network components can be a physical and/or virtualised networking component such as a network switch, router or the like and is configurable, such as by way of flow control, routing control, switching control and the like. Network components include a plurality of measurable metrics that can be indicative of performance and that can be combined aggregated or summarised for the SDN 200 to constitute network performance. Each metric can correspond to a characteristic of a component or network relating to a performance of the component or network. For example, characteristics can include some or all of, inter alia: bandwidth availability; data throughput; a degree of contention; a processor performance; a memory consumption; a memory availability; a measure of temperature; a degree of variability of a performance; a reliability measure; an uptime measure; a downtime measure; and other characteristics as will be apparent to those skilled in the art.

According to embodiments of the present invention, a subset of components constituting the SDN 200 cooperate to provide adaptations to a configuration of the SDN 200, such components being referred to as nodes 202 and include any of: one or more controllers of the SDN 200; physical network components of the SDN 200; virtual network components of the SDN 200; and/or network-attached components constituted in the SDN 200. Notably, embodiments of the present invention do not preclude that only a subset of such controllers, network components or network-attached components may constitute the set of nodes 202.

Each node 202 operates to adapt a configuration of the SDN 200 to improve a measure of network performance of the SDN 200 towards an objective measure of performance. Such objective measure of performance is a performance objective 208 such as a performance goal, constraint, rule or the like. The performance objective 208 is common to the nodes 202 such as by being commonly accessible to the nodes 202 and/or being stored by or in association with each node 202. For example, the performance objective 208 can be a constraint on a data rate of communications such as a minimum data rate. Alternatively, the performance objective 208 can be number of connections such as a number of simultaneous connections within the SDN 200. Alternatively, the performance objective 208 can relate to a potential attack, malicious action or other threat to the SDN such as a characteristic of an attack such as a ratio of "SYN" (synchronisation) to "ACK" (acknowledgement) packets or messages occurring between devices within and/or connected via the SDN 200 (such as may be indicative of a denial of service attack). Other performance objectives will be apparent to those skilled in the art.

Each node 202 includes an evolutionary algorithm 204 as a functional component that may be embodied in hardware, software and/or firmware and is operable to perform an optimisation function such as a metaheuristic optimisation. For example, the evolutionary algorithm can employ evolutionary software processes such as evolutionary computation including a generic population-based metaheuristic optimisation using biologically inspired techniques such as reproduction, mutation, recombination and selection. An example of a suitable evolutionary algorithm is a genetic algorithm such as are known to those skilled in the art such as from "An Introduction to Genetic Algorithms" (Melanie Mitchell, MIT Press, 1996). Genetic algorithms and their applications are known from, inter alia: C. Ahn and R. S. Ramakrishna, "A genetic algorithm for shortest path routing problem and the sizing of populations,", IEEE Transactions on Evolutionary Computation, Vol. 6, No. 6, pp. 566-579, December 2002; E. Alba and B. Dorronsoro "Solving the Vehicle Routing Problem by Using Cellular Genetic Algorithms" Procedings ot 2004 European Conference on Evolutionary Computation in Combinatorial Optimization, Coimbra, Portugal, pp 11-20, 2004; A. Starkey, H. Hagras, S. Shakya, and G. Owusu "A Genetic Algorithm Based Approach for the Simultaneous Optimisation of Workforce Skill Sets and Team Allocation." In: Bramer M., Petridis M. (eds) Research and Development in Intelligent Systems XXXIII. SGAI 2016. Springer; M. Barbosa and M. Jr., "Access Point Design with a Genetic Algorithm," Proceedings of the Sixth International Conference on Genetic and Evolutionary Computing, Kitakushu, pp. 119-123, 2012; and X. Chen, Z. Bo, X. Dong and S. Shi, "Analysis of ant colony algorithm for finding the optimal circuitous route in the communication network of power system," Proceedings of the 5th International Conference on Electric Utility Deregulation and Restructuring and Power Technologies (DRPT), Changsha, pp. 2532-2535, 2015.

Genetic Algorithms (GAs) are inspired by nature taking the core ideas of evolution, selection and mutation. In GAs a population will adapt itself to its environment through many generations. Chromosomes are ranked through survival of the fittest, meaning individuals most suited an environment are ranked more highly. Each possible solution to a problem is represented as a chromosome, with a chromosome being made up of a collection of genes with a gene encoding a portion of a specific solution. Genetic information is passed from generation to generation allowing promising genes to thrive. This information is passed on through a process named "crossover" in which two chromosomes are selected to produce offspring chromosomes. These offspring contain a portioning of genes from each parent, and therefore are a combination of both solutions to a problem. Chromosomes are chosen for crossover through a process known as "selection". Those skilled in the art will be aware that there are numerous different ways that selection could occur, including, inter alia: tournament; or roulette wheel based on their individual fitness score. Fitness is determined by some specific measurable metric which could be a value that needs to be minimised or maximised. If a population of chromosomes surpasses a predesignated size, lowest ranked solutions can be removed from the population allowing only fittest solutions to survive.

Just as in nature there is a random chance of mutation, this happens in GAs when offspring are produced during the crossover process. Mutation is good for the population as it allows for new genes to appear in the population and thus allows the GA to explore new possible solutions. Through multiple generations of crossover, selection and mutation, evolution will begin to occur with dominant chromosomes rising to the top of the genepool. After a predesignated number of generations, or satisfaction of some other suitable stopping criteria, the GA will cease and a solution with the best fitness value will be chosen from the population as the selected solution.

In embodiments of the present invention, the evolutionary algorithm 204 is operable on the basis of a population of possible changes to a configuration of the SDN 200 from which candidate adjusted configurations can be generated. Thus, in use, each node 202 generates a candidate adjusted configuration using the evolutionary algorithm 204. For such a candidate adjusted configuration, the node determines, a performance of the SDN 200 with the SDN 200 reconfigured in accordance with the candidate adjusted configuration. This determination is made by way of a performance determiner component 206 of the node, such as a hardware, software, firmware or combination component arranged to determine a measure of performance of the SDN 200 with a candidate adjusted configuration being effected. In a preferred embodiment, the performance determiner 206 includes, uses or has access to, a simulation of the SDN 200 such as a software and/or data model or other suitable simulation of the SDN 200, on which basis to determine a measure of performance of the SDN 200 with the candidate adjusted configuration in effect.

Where a node 202 determines that a candidate adjusted configuration provides an improvement to a performance of the SDN 200 towards the performance objective 208, the node 202 stores the candidate adjusted configuration to a distributed database 210.

The distributed database 210 is a database for storing records that is accessible to the nodes 202 of the SDN 200. While the database 210 is depicted in Figure 2 as being constituted as part of the SDN 200, this is merely a preferred arrangement and the database 210 could alternatively be provided at least partly outside the SDN 200 but accessible to the nodes 202 of the SDN 200. Each record 212 of the database 210 corresponds to a candidate configuration change generated by a node 202 and includes a specification of the candidate configuration change 214 within the record. For example, a specification of a candidate configuration change 214 can be provided as one or more of: a new complete or partial configuration of the SDN 200; a change to a reference configuration of the SDN 200; and/or a relative change to a configuration of the SDN 200 such as an adjustment to a configuration of the SDN 200.

In a preferred embodiment, the distributed database 210 is provided as a distributed transactional and/or distributed sequential database such as a blockchain. Distributed sequential and/or distributed transactional databases are well known in the field of blockchains and are documented, for example, in "Mastering Bitcoin. Unlocking Digital Crypto-Currencies." (Andreas M. Antonopoulos, O'Reilly Media, April 2014). For convenience, such a database is herein referred to as a blockchain though it will be appreciated that other suitable databases, data structures or mechanisms possessing the characteristics essential for embodiments of the present invention could alternatively be used. A blockchain is a distributed chain of block data structures accessed by a network of nodes, referred to as a miner network. Each block in the blockchain includes a plurality of transaction data structures, each transaction referring or relating to a prior transaction. For example, in a preferred embodiment each blockchain includes a Merkle of hash or digest values for transactions included in the block to arrive at a hash value for the block, which is itself combined with a hash value for a preceding block to generate a chain of blocks (blockchain). A new block of transactions is added to the blockchain by miner software, hardware, firmware or combination systems in a miner network. The miners are communicatively connected to sources of transactions (such as nodes 202 storing candidate configuration changes 214) and access or copy the blockchain. A miner can undertake validation of a substantive content of a transaction (such as any criteria defined therein) and adds a block of new transactions to the blockchain when a challenge is satisfied, typically such challenge involving a combination hash or digest for a prospective new block and a preceding block in the blockchain and some challenge criterion. Thus, miners in the miner network may each generate prospective new blocks for addition to the blockchain. Where a miner satisfies or solves the challenge and validates the transactions in a prospective new block such new block is added to the blockchain. Accordingly, a blockchain provides a distributed mechanism for reliably verifying a data entity such as an entity constituting or representing a node 202. The detailed operation of such blockchains and the function of miners in a miner network is beyond the scope of this specification. The manner in which a blockchain and network of miners operate ensures that only valid transactions are added within blocks to the blockchain in a manner that is persistent within the blockchain. Transactions added erroneously or maliciously are not verifiable by other miners in the network and cannot persist in the blockchain. This attribute of blockchains can be exploited by embodiments of the present invention to provide a distributed and reliable assurance for nodes 202 of the authenticity and reliability of information stored in records of the distributed database 210.

In some embodiments, the function of a miner can be performed by the nodes 202 themselves, with nodes 202 serving to validate records in the database 210. Furthermore, in some embodiments the challenge for committing blocks in a blockchain used in an embodiment of the present invention can be constituted as a determination that a degree of progress has been made towards the performance objective 208, such as a threshold degree of progress or a threshold differential in performance towards the objective 208.

Thus, in use, nodes 202 generate candidate adjusted configurations for the SDN 200 and store such candidates that constitute improvements in a performance of the SDN 200 towards to the performance objective 208 in the distributed database 200.

Furthermore, nodes 202 access the records 212 in the distributed database 210 to determine, for a candidate configuration change 214 in a record 212, a performance of the candidate configuration change 213. Such determination can be made by a node's performance determiner 206 as previously described, such as by way of a simulation of the SDN 200. Subsequently, nodes 202 record their determined performance along with, preferably, a node identifier, within or in association with the record 212 for a candidate configuration change 214. In this way, the efficacy of a candidate configuration change 214 in providing an improvement of performance of the SDN 200 towards the performance objective 208 can be identified by way of the performance determinations for each of a plurality of nodes 202 stored in a record 212 for the candidate.

Accordingly, a candidate adjusted configuration 214 in the distributed database 210 providing a greatest improvement to a measure of network performance can be commonly selected by the nodes 202 by reference to the distributed database 210 and the determined performance measures 216 therein. Thus, such candidate adjusted configuration 214 can be retrieved from the distributed database 210 and applied to the SDN 200 to effect a performance improvement.

Notably, the process is preferably repetitive such that nodes 202 employ their evolutionary algorithms to determine further candidate configuration changes improving on a current performance of the SDN 200 on a continual basis until the performance objective 208 is met or is met to a sufficient, satisfactory extent such as to a predetermined threshold extent.

In one embodiment, the evolutionary algorithm 204 for a node 202 is operable based on a population of candidate adjusted configurations and the population of candidate adjusted configurations can be generated by the nodes 202 themselves. According to such an embodiment, each node 202 is further operable to identify a candidate adjusted configuration that provides an improvement to the measure of network performance (such as by way of the performance delimiter) with the other nodes 202. Preferably, such sharing is achieved via a distributed data structure such as a distributed hash table (DHT) 218. A distributed hash table is a distributed data structure accessible via a network such as SDN 200. A distributed hash table is a decentralised distributed data structure for the storage and retrieval of data in the manner of a hash table (e.g. based on (*key, value*) pairs). A distributed hash table is accessed by the plurality of nodes 202 cooperating in the efficient storage and retrieval of values based on keys generated by a hashing algorithm for the values. Keys are identifiers which map to particular values which in turn can be anything from addresses, to documents, to arbitrary data. Distributed Hash Tables are known in the art as described in detail in, for example, the book "Distributed Hash Table, Theory, Platforms and Applications" (Zhang, H., Wen, Y., Xie, H., Yu, N., Springer, 2013). For example, chapter 2 of the book details distributed hash table theory.

The distributed data structure is accessible to the nodes 202 and each candidate adjusted configuration 220 shared by the distributed data structure includes: a specification 222 of the candidate; preferably an identification 224 of the node 202 that generated the candidate; and a measure 226 of network performance of the SDN 200 having the candidate adjusted configuration applied. For example, the measure of performance 226 can be determined by the performance determiner 206.

According to the embodiment, the distributed data structure 218 provides a population of candidate configuration changes 220 on which basis the evolutionary algorithm 204 of a node 202 can operate, such as a starting population for an evolutionary algorithm 204. Most preferably, the population is selected from the distributed data structure as candidates 220 that indicate a performance 226 meeting predetermined criteria/criterion, such as a sufficient extent of improvement over a current performance of the SDN 200. Thus, the evolutionary algorithm 204 is operable to generate candidate adjusted configurations constituting continuous improvements to a configuration of the SDN 200 by way of the population selected from the candidates 220 in the distributed data structure 218.

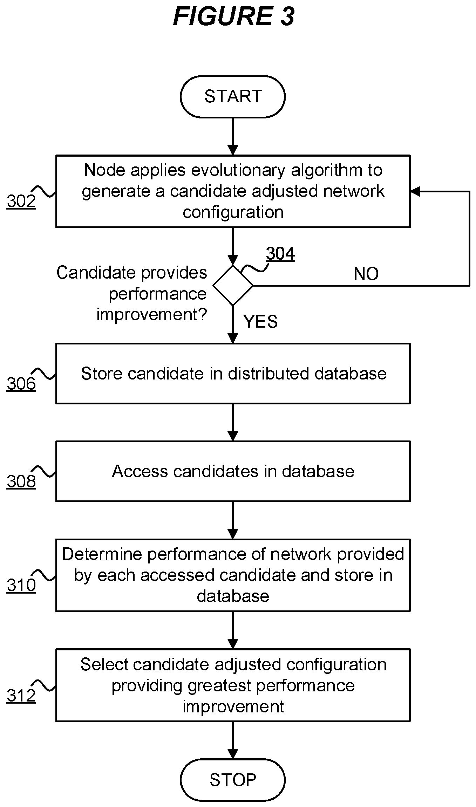

Figure 3 is a flowchart of a method for adapting a configuration of a software defined network (SDN) to improve a measure of network performance towards an objective measure of performance according to an embodiment of the present invention. The method applies to a single node 202 and it will be appreciated that all or a subset of nodes 202 are operable according to the method. Initially, at step 302, the node applies the evolutionary algorithm 204 to generate a candidate adjusted configuration for the network. At step 304 the method determines if the candidate provides an improvement to the measure of network performance for the SDN 200. If the candidate does provide an improvement, the method proceeds to step 306 and the node stores the candidate as a record 212 in the distributed database 210 accessible to the nodes 202 for access by other nodes 202. At step 308 the node accesses the records 212 of candidate configuration changes in the database 210. At step 310 the node determines a performance of the SDN 200 provided by each accessed candidate and stores the performance in the database 210 in association with the candidate record 212 for the candidate. At step 312 the node 202 selects a candidate adjusted configuration providing a greatest improvement to the measure of network performance for adapting the configuration of the SDN 200.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The present invention is solely defined in the appended independent claims. Advantageous features of preferred embodiments are set out in the appended dependent claims.

## Claims

1. A computer implemented method of adapting a configuration of a software defined network to improve a measure of network performance towards an objective measure of performance, the software defined network including a plurality of network nodes (202) communicating via the software defined network, the method comprising:
each network node applying (302) an evolutionary algorithm to generate a candidate configuration change (214) for the software defined network and, responsive to a determination (304) that the candidate configuration change provides an improvement to the measure of network performance, the network node storing (306) the candidate configuration change (214) in a distributed database (210) accessible to the network nodes for access by other network nodes;
each network node accessing (308) one or more candidate configuration changes in the distributed database (210) and determining (310) a performance of the network provided by each of the accessed candidate configuration changes, wherein each network node records the determined performance (216) provided by a candidate configuration change in the distributed database in association with the candidate configuration change (214), such that a candidate configuration change providing a greatest improvement to the measure of network performance is selected (312) by the network nodes for adapting the configuration of the software defined network; and
each network node sharing a candidate configuration change providing an improvement to the measure of network performance with the other network nodes via a distributed data structure (218) accessible to the network nodes, each shared candidate configuration change having an associated measure of network performance for the software defined network having the candidate configuration change applied,
wherein the evolutionary algorithm is operable based on a population of one or more candidate configuration changes in the distributed data structure (218).

2. The method of claim 1 wherein a determination, by a network node, of a performance of the network provided by a candidate configuration change is made by the network node executing a simulation of the software defined network in which the candidate configuration change is applied and determining a measure of network performance provided by the candidate configuration change by measuring a performance of the simulated software defined network.

3. The method of any preceding claim wherein the distributed data structure is a distributed hash table.

4. The method of claim 3 wherein the population of one or more candidate configuration changes is a selected subset of the candidate configuration changes in the distributed data structure selected based on the measure of network performance associated with the candidate configuration changes in the distributed data structure.

5. The method of any preceding claim wherein the distributed database is a blockchain data structure.

6. The method of any preceding claim wherein the evolutionary algorithm is a genetic algorithm.

7. A computer system including a processor and memory storing computer program code for performing the steps of the method of any preceding claim.

8. A computer program element comprising computer program code to, when loaded into a computer system and executed thereon, cause the computer to perform the steps of a method as claimed in any of claims 1 to 6.

## Patentansprüche

1. Computerimplementiertes Verfahren zum Anpassen einer Konfiguration eines softwaredefinierten Netzes zum Verbessern eines Maßes einer Netzleistungsfähigkeit zu einem objektiven Maß einer Leistungsfähigkeit, wobei das softwaredefinierte Netz mehrere Netzknoten (202) umfasst, die über das softwaredefinierte Netz kommunizieren, wobei das Verfahren Folgendes umfasst:
Anwenden (302), durch jeden Netzknoten, eines evolutionären Algorithmus, um eine Kandidatenkonfigurationsänderung (214) für das softwaredefinierte Netz zu erzeugen, und, als Reaktion auf eine Bestimmung (304), dass die Kandidatenkonfigurationsänderung eine Verbesserung für das Maß einer Netzleistungsfähigkeit bereitstellt, Speichern (306), durch den Netzknoten, der Kandidatenkonfigurationsänderung (214) in einer verteilten Datenbank (210), auf die die Netzknoten zugreifen können, zum Zugriff durch andere Netzknoten;
Zugreifen (308), durch jeden Netzknoten, auf eine oder mehrere Kandidatenkonfigurationsänderungen in der verteilten Datenbank (210) und Bestimmen (310) einer Leistungsfähigkeit des Netzes, die durch jede der Kandidatenkonfigurationsänderungen bereitgestellt wird, auf die zugegriffen wird, wobei jeder Netzknoten die bestimmte Leistungsfähigkeit (216), die durch eine Kandidatenkonfigurationsänderung in der verteilten Datenbank bereitgestellt wird, in Assoziation mit der Kandidatenkonfigurationsänderung (214) aufzeichnet, so eine Kandidatenkonfigurationsänderung, die eine größte Verbesserung des Maßes der Netzleistungsfähigkeit bereitstellt, durch die Netzknoten zum Anpassen der Konfiguration des softwaredefinierten Netzes ausgewählt wird (312); und
Teilen, durch jeden Netzknoten, einer Kandidatenkonfigurationsänderung, die eine Verbesserung des Maßes der Netzleistungsfähigkeit bereitstellt, mit den anderen Netzknoten über eine verteilte Datenstruktur (218), auf die die Netzknoten zugreifen können, wobei jede geteilte Kandidatenkonfigurationsänderung ein assoziiertes Maß einer Netzleistungsfähigkeit für das softwaredefinierte Netz, auf das die Kandidatenkonfigurationsänderung angewandt wurde, aufweist;
wobei der evolutionäre Algorithmus basierend auf einer Population einer oder mehrerer Kandidatenkonfigurationsänderungen in der verteilten Datenstruktur (218) funktionsfähig ist.

2. Verfahren nach Anspruch 1, wobei eine Bestimmung, durch einen Netzknoten, einer Leistungsfähigkeit des Netzes, die durch eine Kandidatenkonfigurationsänderung bereitgestellt wird, vorgenommen wird, indem der Netzknoten eine Simulation des softwaredefinierten Netzes ausführt, wobei die Kandidatenkonfigurationsänderung angewandt wird, und ein Maß einer Netzleistungsfähigkeit, die durch die Kandidatenkonfigurationsänderung bereitgestellt wird, durch Messen einer Leistungsfähigkeit des simulierten softwaredefinierten Netzes bestimmt.

3. Verfahren nach einem vorhergehenden Anspruch, wobei die verteilte Datenstruktur eine verteilte Hash-Tabelle ist.

4. Verfahren nach Anspruch 3, wobei die Population einer oder mehrerer Kandidatenkonfigurationsänderungen eine ausgewählte Teilmenge der Kandidatenkonfigurationsänderungen in der verteilten Datenstruktur ist, die basierend auf dem Maß der Netzleistungsfähigkeit ausgewählt wird, das mit den Kandidatenkonfigurationsänderungen in der verteilten Datenstruktur assoziiert ist.

5. Verfahren nach einem vorhergehenden Anspruch, wobei die verteilte Datenbank eine Blockchain-Datenstruktur ist.

6. Verfahren nach einem vorhergehenden Anspruch, wobei der evolutionäre Algorithmus ein genetischer Algorithmus ist.

7. Computersystem, das einen Prozessor und einen Speicher umfasst, der ein Computerprogrammcode zum Durchführen der Schritte des Verfahrens nach einem der vorhergehenden Ansprüche speichert.

8. Computerprogrammelement, das einen Computerprogrammcode umfasst, um, wenn er in ein Computersystem geladen und darauf ausgeführt wird, das Computersystem dazu zu veranlassen, die Schritte eines Verfahrens nach einem der Ansprüche 1 bis 6 durchzuführen.

## Revendications

1. Procédé mis en œuvre par ordinateur pour l'adaptation d'une configuration d'un réseau défini par logiciel pour améliorer une mesure de performance du réseau vers une mesure de performance visée, le réseau défini par logiciel comportant une pluralité de nœuds de réseau (202) communiquant via le réseau défini par logiciel, le procédé comprenant les opérations suivantes :
chaque nœud du réseau applique (302) un algorithme évolutif pour générer un changement de configuration candidat (214) pour le réseau défini par logiciel et, en réponse à une détermination (304) du fait que le changement de configuration candidat offre une amélioration à la mesure de performance du réseau, le nœud du réseau stocke (306) le changement de configuration candidat (214) dans une base de données distribuée (210) accessible aux nœuds du réseau pour un accès par d'autres nœuds du réseau ;
chaque nœud du réseau accède (308) à un ou plusieurs changements de configuration candidats dans la base de données distribuée (210) et détermine (310) une performance du réseau offerte par chacun des changements de configuration candidats accédés, chaque nœud du réseau enregistrant la performance déterminée (216) offerte par un changement de configuration candidat dans la base de données distribuée en association avec le changement de configuration candidat (214), de telle sorte qu'un changement de configuration candidat offrant une meilleure amélioration à la mesure de performance du réseau soit sélectionné (312) par les nœuds du réseau pour l'adaptation de la configuration du réseau défini par logiciel ; et
chaque nœud du réseau partage un changement de configuration candidat offrant une amélioration de la mesure de performance du réseau avec les autres nœuds du réseau via une structure de données distribuée (218) accessible aux nœuds du réseau, chaque changement de configuration candidat partagé ayant une mesure associée de performance du réseau pour le réseau défini par logiciel auquel le changement de configuration candidat est appliqué,
l'algorithme évolutif fonctionnant sur la base d'une population d'un ou plusieurs changements de configuration candidats dans la structure de données distribuée (218).

2. Procédé selon la revendication 1, dans lequel une détermination, par un nœud du réseau, d'une performance du réseau offerte par un changement de configuration candidat est effectuée par le nœud du réseau exécutant une simulation du réseau défini par logiciel auquel le changement de configuration candidat est appliqué et la détermination d'une mesure de performance du réseau offerte par le changement de configuration candidat par mesure d'une performance du réseau défini par logiciel simulé.

3. Procédé selon l'une quelconque des revendications précédentes, dans lequel la structure de données distribuée est une table de hachage distribuée.

4. Procédé selon la revendication 3, dans lequel la population d'un ou plusieurs changements de configuration candidats est un sous-ensemble sélectionné des changements de configuration candidats dans la structure de données distribuée sélectionnée sur la base de la mesure de performance de réseau associée aux changements de configuration candidats dans la structure de données distribuée.

5. Procédé selon l'une quelconque des revendications précédentes, dans lequel la base de données distribuée est une structure de données de type chaîne de blocs.

6. Procédé selon l'une quelconque des revendications précédentes, dans lequel l'algorithme évolutif est un algorithme génétique.

7. Système informatique, comportant un processeur et une mémoire stockant un code de programme informatique pour exécuter les étapes du procédé selon l'une quelconque des revendications précédentes.

8. Élément de programme informatique comprenant un code de programme informatique destiné, lorsqu'il est chargé dans un système informatique et exécuté sur celui-ci, à amener l'ordinateur à exécuter les étapes d'un procédé selon l'une quelconque des revendications 1 à 6.
